# EUROPÄISCHE PATENTSCHRIFT

(11) **EP 1 671 903 B1**
(45) Veröffentlichungstag und Bekanntmachung des Hinweises auf die Patenterteilung: **09.04.2008**
(21) Anmeldenummer: 05027498.4
(22) Anmeldetag: 15.12.2005
(51) Int. Cl.: B65G 47/14, B65G 47/84, G01G 17/00

(54) **Vorrichtung zum vereinzelten Weitertransport von leichten Kleinteilen, wie insbesondere von Tabletten**
Device for singulated further transporting of light small articles, in particular tablets
Dispositif pour le transport individuel d'objets légers de petite taille, en particulier de comprimés

(30) Priorität: 16.12.2004 DE 202004019646 U
(43) Veröffentlichungstag der Anmeldung: 21.06.2006
(73) Patentinhaber: Harro Höfliger Verpackungsmaschinen GmbH, 71573 Allmersbach im Tal (DE)
(72) Erfinder: Reiser, Manfred, 71364 Winnenden (DE); Wurst, Reiner, 71549 Auenwald (DE); Meyer, Hermann, 71404 Korb (DE)
(74) Vertreter: Müller, Hans

(56) Entgegenhaltungen:
- CH-A- 565 692
- NL-A- 9 102 028
- US-A- 4 208 962
- US-A- 4 741 428
- US-A- 6 114 636

## Beschreibung

### TECHNISCHES GEBIET

Die Erfindung betrifft eine Vorrichtung, mit der leichte Kleinteile wie beispielsweise Tabletten jeweils einzeln weitertransportiert werden können gemäß dem Oberbegriff des Anspruchs 1. Solches vereinzeltes Weitertransportieren kann im Zusammenhang mit dem Herstellen und Konfektionieren von beispielsweise Tabletten oder im Zusammenhang mit einer Sortierstation erforderlich werden, in der solche Kleinteile in sogenannte GUT-Teile und SCHLECHT-Teile unterschieden werden, damit für die weitere Bearbeitung oder Verarbeitung dieser Teile nur GUT-Teile und nicht auch SCHLECHT-Teile zur Verfügung stehen und damit kein mit SCHLECHT-Teilen vermeidbarer weiterer, wirtschaftlich unnötiger weiterer Aufwand getrieben zu werden braucht. Die weitere Behandlung solcher Kleinteile, insbesondere Tabletten kann dann beispielsweise darin bestehen, dass sie beispielsweise in Hartgelatinekapseln eingeführt werden.

### STAND DER TECHNIK

Zum vereinzelten Weitertransport von Kleinteilen sind sogenannte Sortiertöpfe bekannt. Diese Sortiertöpfe schwingen um die eigene Achse und bewegen dadurch die in ihnen vorhandenen kleinen Teile wie beispielsweise Tabletten vorwärts. Die kleinen Teile verlassen dadurch in einer ansteigenden Spiralbahn an Schikanen vorbei letztlich den Fördertopf lagerichtig. Um eine sichere Ausbringung zu gewährleisten, müssen die Teile anschließend aufgestaut und dann einzeln in Förderrichtung beschleunigt wegbewegt werden. Die Leistung und Funktion solcher Sortiertöpfe ist wenig zufriedenstellend. So vergrößert sich mit der Zeit durch den Abrieb der transportierten Teile ihre Reibung. Bei Teilen aus Gummi hilft oft nur ein Trennmittel (Silikon), um die Teile auseinander zu bringen, was der Förderleistung aber abträglich ist. Trennmittel sind später zum Beispiel in Spritzen oder bei anderen Prozessen aber nicht erwünscht.

Dosierstationen insbesondere für Tabletten sind im Zusammenhang mit dem Zuführen, Vereinzeln, Ausrichten und/oder Dosieren insbesondere im Zusammenhang mit dem Zuführen von Tabletten in eine Hartgelatinekapsel hinein bekannt. Diese Stationen müssen vorrichtungsmäßig an die Form und Ausrichtung der Tabletten angepasst werden, so dass in der selben Tablettendosierstation nur Tabletten mit einer ganz bestimmten Tablettenform verarbeitet und damit weitertransportiert werden können. Unabhängig davon haben die bekannten Tablettendosierstationen, wie auch die vorstehend erwähnten Sortiertöpfe einen großen Platzbedarf. In den einzelnen Teilaggregaten der Tablettendosierstation, die zum Zuführen und Vereinzeln der Tabletten vorgesehen sind, können sich einzelne Tabletten nur allzu leicht verkeilen, so dass die Aggregate sehr störanfällig arbeiten. Mit Vibrationseinheiten wird versucht, dieses zu verhindern, was allerdings nur unzureichend gelingt; abgesehen davon, dass solche ständig arbeitenden Vibrationseinheiten eine unerwünschte Lärmbelästigung darstellen. Insbesondere erweist sich von Nachteil, dass auch die Ausbringleistung der vorbekannten Tablettendosierstationen aufgrund der Tatsache, dass sie an die jeweiligen Tabletten angepasst sein müssen, unerwünscht gering ist.

In der niederländischen Patentschrift NL-A-9 102 028 ist eine Vorrichtung zum vereinzelten Weitertransport von Fischen offenbart. Mit Hilfe eines mit Saugnäpfen versehenen Endlosförderers werden die Fische mittels Unterdruck einzeln von einem eine Wanne oben bedeckenden Gitterboden aufgenommen und zu einem Abgabepunkt transportiert. Dort wird der Unterdruck aufgehoben, so dass die Fische nach unten von dem Enlosförderer wegfallen können.

In der Patentschrift CH-A-565 692 ist eine Vorrichtung zum vereinzelten Weitertransport von Teilen gemäß dem Oberbegriff des Anspruchs 1 offenbart.

### DARSTELLUNG DER ERFINDUNG

Ausgehend von diesem vorbekannten Stand der Technik liegt der Erfindung die Aufgabe zugrunde, eine in technischer Hinsicht zufriedenstellende Vorrichtung anzugeben, die zum vereinzelten Weitertransport von leichten Kleinteilen, wie insbesondere von Tabletten, gut geeignet ist, und deren Ausbringleistung möglichst hoch ist und mit der insbesondere Tabletten beschädigungsfrei einzeln weitertransportiert werden können. Dabei soll die Vorrichtung möglichst ohne Umbaumaßnahmen Kleinteile, wie insbesondere Tabletten, mit unterschiedlicher Form und Größe technisch einwandfrei und leistungsstark verarbeiten können. Ein wirtschaftlich günstiger Betrieb einer solchen Weitertransportvorrichtung und damit auch eine möglichst pharmagerechte und leicht zu reinigende Bauweise einer solchen Vorrichtung stellen weitere Anforderungen dar.

Diese Erfindung ist durch die Merkmale des Anspruchs 1 gegeben. Sinnvolle Weiterbildungen der Erfindung sind Gegenstand von sich daran anschließenden weiteren Ansprüchen.

Das Aufnehmen der Kleinteile in der jeweiligen Transport-Aufnahmeposition der jeweiligen Saugdüse erfolgt dadurch, dass in der Wanne ein Kleinteilebett vorhanden ist, in das die jeweilige Saugdüse vor Aufnahmen eines Kleinteils jeweils eintaucht. Die Saugdüsen bewegt sich bei der Verwendung eines Aufnahmerades oder einer Aufnahmewalze durch ein solches Bett von kleinen Teilen in einer Richtung hindurch.

Durch einen ansaugenden Transport von leichten Kleinteilen, wie insbesondere von Tabletten, ist es auf einfache Weise möglich, solche kleinen Teile leistungsstark und beschädigungsfrei zu transportieren, und zwar insbesondere auf eine schonende und technisch einfache Weise. Ein gegenseitiges Verkeilen oder Verklemmen mehrerer Kleinteile, was nicht nur den Transport innerhalb der Vorrichtung beeinträchtigen beziehungsweise ganz zum Erliegen bringen würde, sondern auch zu einer mechanischen Beschädigung der Kleinteile führen würde, kann damit sehr wirkungsvoll verhindert werden. Unter leichten Kleinteile werden dabei alle solche Gegenstände verstanden, die sich sicher ansaugen lassen und die sicher angesaugt transportiert werden können, und zwar in jeder Lage.

Erfindungsgemäß sind zumindest zwei unterschiedliche TransportAbgabepositionen vorgesehen. In der einen Abgabeposition kann das jeweilige Kleinteil, wie beispielsweise die angesaugt gehaltene Tablette, so lagemäßig vorhanden sein, dass dieses Kleinteil wieder in die Wanne zurück befördert werden kann. Eine vorzugsweise vorher angeordnete andere Transport-Abgabeposition kann so vorgesehen werden, dass in dieser Abgabeposition das jeweilige Kleinteil wie insbesondere Tablette an eine weitere Bearbeitungs- oder Verarbeitungsstation übergeben werden kann.

Die zum saugenden Halten und Transportieren verwendeten Saugdüsen, die als in sich flexible Saugrüssel, insbesondere in Form von biegeweichen Kunststoffschläuchen, ausgebildet sein können, werden abwechselnd zwischen einer Transport-Aufnahmeposition für die jeweiligen Kleinteile und eine Transport-Abgabepostion für solche Kleinteile verstellt, wobei die jeweilige Saugdüse dabei aus einer Wanne heraus und von derselben wegbewegt und wieder zu und in die Wanne hinbewegt wird, innerhalb der die einzeln weiter zu transportierenden kleinen Teile vorrätig behalten werden.

Die Saugdüsen sind umfangsmäßig verteilt beispielsweise an einem Aufnahmerad oder an einer Aufnahmewalze vorhanden. Das Aufnahmerad oder diese Aufnahmewalze brauchen in nur einer Umdrehungsrichtung angetrieben zu werden. Dieses Antreiben erfolgt kontinuierlich.

Die Bearbeitungs- oder Verarbeitungsstation kann nach einer wesentlichen Weiterbildung der Erfindung eine Wägestation sein. In dieser Wägestation kann beispielsweise das Gewicht einzelner Teile wie insbesondere einzelner Tabletten aufsummiert werden bis zu einem Gesamt-Sollgewicht. Dieses Sollgewicht kann sich durch eine, beispielsweise durch zerbrochene Tabletten verursachte unterschiedlich große Anzahl von Tablettenstücken, ergeben.

Die Wägestation kann auch so ausgebildet sein, dass durch sie lediglich Kleinteile wie insbesondere Tabletten daraufhin unterschieden werden, ob sie ein bestimmtes Sollgewicht aufweisen oder nicht. Die Wägestation kann damit zum Sortieren in GUT- und SCHLECHT-Kleinteile (Tabletten) verwendet werden. In diesem Fall wird erreicht, dass SCHLECHT-Teile beispielsweise möglichst am Anfang von verschiedenen Arbeitsstationen aus dem Bearbeitungsprozess aussortiert werden, um so unnützen Bearbeitungsaufwand mit nicht zu verwendenden Teilen auszuschließen.

Nach einem auch in der Zeichnung dargestellten Ausführungsbeispiel kann die Wägestation zumindest einen, vorzugsweise muldenförmigen Wägeteller besitzen, der in gegensätzliche Richtungen dreh- oder schwenkbar ausgebildet ist. Dadurch können Kleinteile wie Tabletten in GUT- oder SCHLECHT-Behälter, je nach dem Ergebnis ihres ermittelten Gewichtes, hineingefüllt werden.

Vorzugsweise sind mehrere Wägeteller umfangsmäßig verteilt auf einem Drehglied vorhanden. In jeder Drehstellung des Drehgliedes steht immer ein Wägeteller zur Aufnahme von Kleinteilen, wie Tabletten lagemäßig bereit. Die Wägeteller sind insbesondere fest an den Drehglied angebracht. Das Drehglied kann dann in entgegengesetzten Richtungen um einen festen Winkelbetrag verdreht werden, der dem Winkelbetrag entspricht, der dem umfangsmäßigen Abstand zueinander benachbarter Wägeteller entspricht.

Zwischen der Wägestation und der einen Transport-Abgabeposition, aus der heraus Kleinteile der in diesem Falle als Wägestation ausgebildeten weiteren Station übergeben werden, kann ein Zuführkanal als Zwischentransport-Einrichtung vorgesehen sein. Dieser Zuführkanal kann insbesondere rinnenförmig ausgebildet sein. Er kann des Weiteren in einer schiefen Ebene ausgerichtet sein, um einen schonenden und dabei wirtschaftlich einfachen Transport zu ermöglichen.

Dieser schonende Transport kann auch insbesondere dadurch weiter verbessert werden, dass die Neigung des Endbereiches des Zuführkanals der Neigung des Randbereiches jedes der Wägetellers entspricht, so dass eine stoßfreie und sprungfreie Übergabe von dem Zuführkanal zu dem jeweils bereitstehenden Wägeteller sich ermöglichen lässt.

In ihrer jeweiligen Transport-Abgabeposition wirkt auf die angesaugt gehaltenen Kleinteile keine Saugluft mehr ein, so dass die Tabletten von der Zwischentransport-Einrichtung abfallen können. Vorteilhafterweise kann in dieser Transport-Abgabeposition auch noch Druckluft auf die jeweiligen Kleinteile ausgeübt werden, vorzugsweise durch die Saugdüsen hindurch, um so aktiv auf das Abfallen der Kleinteile einwirken zu können.

Die rinnenförmige Wanne, in der das Kleinteilebett hergestellt wird, durch das sich die Zwischentransport-Einrichtung mit ihren Saugdüsen hindurch bewegt, kann mit ihrem einen Ende an der Ausflussöffnung eines Vorratsbehälters für Kleinteile so angeordnet sein, dass die Kleinteile von dem Vorratsbehälter an die Wanne übergeben werden können, wie insbesondere von dem Vorratsbehälter direkt in die Wanne hinein fallen können. Der Ausfluss aus dem Vorratsbehälter kann dabei vorteilhafterweise verändert werden. Dies kann beispielsweise dadurch leicht technisch verwirklicht werden, dass die Größe der Ausflussöffnung veränderbar ausgebildet wird.

Die Wanne ist vorzugsweise intermittierend hin und her bewegbar ausgebildet, so dass eine möglichst gleichmäßige Verteilung der Kleinteile in der Wanne sichergestellt werden kann.

An dem Vorratsbehälter können Rüttel- oder Vibriervorrichtungen vorgesehen sein, um den Ausfluss von Kleinteilen aus dem Vorratsbehälter heraus zu erleichtern und die Ausflussstärke regeln zu können. Es können Einrichtungen für die Kleinteile vorhanden sein, um dieselben in der Zwischentransport-Einrichtung, wie insbesondere an den Saugdüsen, lagemäßig ausrichten zu können. Ausricht-Einrichtungen können stab- oder wandartig ausgebildet sein und auch in ihrer Größe und Lage verstellbar sein.

Einrichtungen zum Überwachen der Funktion der Transportvorrichtung helfen, den Arbeitsbetrieb störungsfrei beziehungsweise transparent zu machen. Solche Überwachungseinrichtungen können Sensoren enthalten, die beispielsweise zum Überwachen der Höhe des Kleinteilebettes oder zur Überwachung der Funktion der Wägeeinrichtung vorgesehen sein können.

Insbesondere kann die erfindungsgemäße Transportvorrichtung im Zusammenhang mit ihrer Wägestation dafür benutzt werden, dass nur die durch die Wägestation ermittelten GUT-Kleinteile einer beispielsweise Kapselfüllmaschine zur Verfügung gestellt werden, so dass der Vorratsbehälter, aus der die Kapselfüllmaschine bedient wird, der in der Wägestation vorhandene, vorstehend beschriebene GUT-Behälter ist.

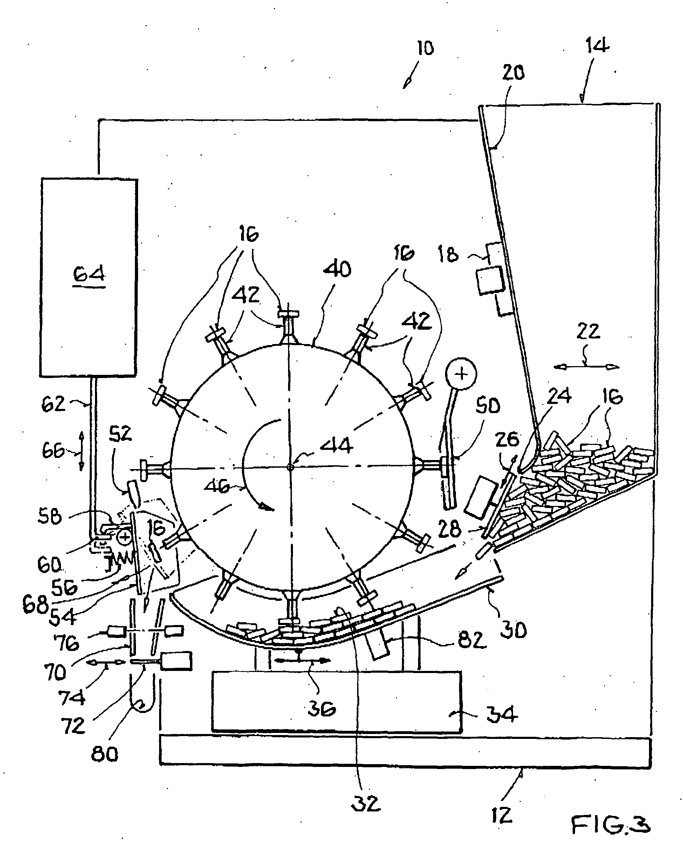

Statt einer Wägestation kann als eine weitere, an die erfindungsgemäße Transportvorrichtung angeschlossene Station eine in Fig. 3 dargestellte Sortiereinrichtung angeschlossen sein. Diese Sortiereinrichtung kann eine beispielsweise zwischen verschiedenen Stellungen verschwenkbare Klappe aufweisen, die so auf Kleinteile wie Tabletten einwirkt, dass diese Kleinteile nicht automatisch, sondern wahlweise in ein Behältnis einbringbar sind beziehungsweise nicht einbringbar sind. Dieses Behältnis kann eine Kapsel, wie beispielsweise eine Hartgelatinekapsel, sein. Die Sortiereinrichtung wirkt dann mit einer Art von Dosiereinrichtung zusammen.

Die Sortiereinrichtung kann auf jedes Kleinteil so einwirken, dass dasselbe wieder in das Kleinteilebett zurückgeführt wird. Dies hängt zum Beispiel davon ab, ob jeweils Behältnisse, wie insbesondere Kapseln, zum Befüllen bereitstehen.

In ihrer Transport-Abgabeposition können die jeweiligen Kleinteile mittelbar, beispielsweise mittels der vorstehend erwähnten Sortier- und Dosiereinrichtung, oder auch unmittelbar in ein Behältnis, wie insbesondere in eine Kapsel, hineingebracht werden. So ist es möglich, das Kleinteil zuerst in einen Zuführkanal und aus demselben dann in das Behältnis, wie insbesondere in die Kapsel, hineinzubringen. Die Kleinteile können aus ihrer jeweiligen Transport-Abgabeposition auch zuerst in die Sortiereinrichtung und aus derselben dann entweder direkt in ein Behältnis wie in eine Kapsel oder zuerst in den bereits erwähnten Zuführkanal und von dort in eine Kapsel gebracht werden.

Es bietet sich an, den Zuführkanal an seinem Auslassende verschließbar auszubilden, was beispielsweise durch einen Schieber verwirklicht werden kann. Auf diese Weise kann auf einfache Weise sichergestellt werden, dass jeweils die Anzahl von Kleinteilen, die in ein Behältnis, wie in eine Kapsel, hineingefüllt werden sollen, auch wirklich zum Befüllen bereitstehen.

Das Kleinteilebett, durch das sich die Zwischentransport-Einrichtung hindurchbewegt beziehungsweise die Saugdüsen derselben hindurchbewegen, kann die vorstehend erwähnte rinnenförmige Wanne sein. Das eine Ende dieser Wanne kann an der Ausflussöffnung eines Vorratsbehälters für Kleinteile so angeordnet sein, dass die Kleinteile von dem Vorratsbehälter an die Wanne übergeben werden können, wie insbesondere von dem Vorratsbehälter direkt in die Wanne hineinfallen können. Der Ausfluss aus dem Vorratsbehälter kann dabei vorteilhafterweise verändert werden. Dies kann beispielsweise dadurch leicht technisch verwirklicht werden, wenn die Größe der Ausflussöffnung veränderbar ausgebildet wird.

Das demgegenüber andere Ende der Wanne kann an der Transport-Abgabeposition des jeweiligen Kleinteils wiederum so angeordnet sein, dass Kleinteile aus ihrer jeweiligen Transport-Abgabeposition wahlweise in diese Wanne zurückgebracht werden können.

An dem Vorratsbehälter können Rüttel- oder Vibriervorrichtungen vorhanden sein, um den Ausfluss von Kleinteilen aus dem Vorratsbehälter heraus zu erleichtern und die Ausflussstärke zu regeln. Es können Einrichtungen für die Kleinteile vorhanden sein, um dieselben in der Zwischentransport-Einrichtung, wie insbesondere an den Saugdüsen, lagemäßig ausrichten zu können. Ausricht-Einrichtungen können stab- oder wandartig ausgebildet sein und auch in ihrer Größe und Lage verstellbar sein.

Die Überwachungseinrichtung für die Anzahl der in dem Zuführkanal vorhandenen Kleinteile kann mit der Rüttel- oder Vibriervorrichtung des Vorratsbehälters so steuerungsmäßig verbunden sein, dass die Rüttel- oder Vibriervorrichtung nur bei zu niedriger Höhe des Kleinteilebettes wirksam wird.

Eine platzsparende Bauweise der Transportvorrichtung lässt sich dadurch verwirklichen, dass sie einerseits abgetrennt von dem Produktionsraum, in dem die Kleinteile insbesondere Tabletten produziert werden, vorgesehen wird, was durch eine sogenannte Balkonbauweise verwirklicht werden kann. Dadurch beeinflußt der Betrieb der Transportvorrichtung nicht die Produktion der jeweiligen Kleinteile insbesondere Tabletten. Die gegenseitigen Be-, Verarbeitungsbeziehungsweise Herstellstationen können sich damit nicht gegenseitig stören. Die durch eine solche Balkonbauweise bewirkte, wenig störenden Raum beinhaltende Bauweise, ermöglicht es, die Transportvorrichtung beispielsweise auf einer Behälterfüllmaschine, wie insbesondere Kapselfüllmaschine anzuordnen.

Die Transportvorrichtung hat darüber hinaus den Vorteil, dass sie unabhängig von der Produktionsstätte der eigentlichen Kleinteile jederzeit und darüber hinaus einfach demontiert und gereinigt werden kann.

Weitere vorteilhafte Ausgestaltungen und Weiterbildungen der Erfindung sind den sonstigen Merkmalen der Ansprüche sowie dem nachstehenden Ausführungsbeispiel zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine teilweise geschnittene Seitenansicht einer erfindungsgemäßen Transportvorrichtung,
- Fig. 2: die Transportvorrichtung nach Fig. 1 im Zusammenhang mit einer daran angeschlossenen Wägestation,
- Fig. 3: die Transportvorrichtung nach Fig. 1 im Zusammenhang mit einer Tablettensortier- und -dosierstation.

### WEGE ZUM AUSFÜHREN DER ERFINDUNG

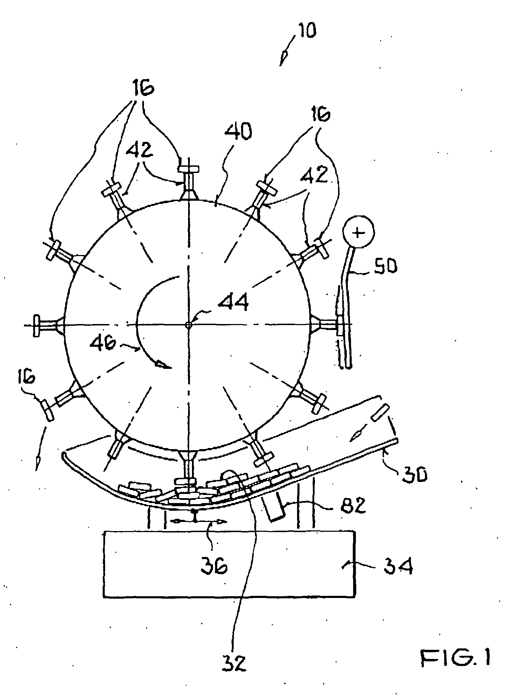

Eine Transportvorrichtung 10, mit der Tabletten 16 vereinzelt transportiert werden können, besitzt eine im Querschnitt U-förmige, offene rinnenförmige Wanne 30, die mit ihrem in Fig. 1 rechten Ende so positioniert ist, dass beispielsweise aus einem in Fig. 3 dargestellten Vorratsbehälter 14 herausfallende Tabletten 16 in die Wanne 30 hineinfallen. Die Wanne 30 ist in der in der Fig. 1 dargestellten Seitenansicht bogenförmig ausgebildet, so dass sich in ihrem mittleren, unteren Längsbereich ein Tablettenbett 32 ausbildet. Die Wanne 30 ist auf einer Halterung 34 aufgeständert befestigt. Die Wanne 30 kann mit der Halterung 34 in Richtung des Doppelpfeils 36 hin und her, das heißt im vorliegenden Fall horizontal hin und her bewegt werden. Dadurch bildet sich ein gleichmäßig hohes Tablettenbett 32 im mittleren, muldenförmigen Bereich der Wanne 30 aus. In der Zeichnung ist dieses Tablettenbett 32 noch nicht optimal ausgerichtet dargestellt.

Oberhalb der Wanne 30 ist ein Aufnahmerad 40 mit umfangsmäßig wegstehenden Saugdüsen 42 um eine Drehachse 44 so positioniert, dass die Saugdüsen 42 durch das Tablettenbett 32 bei Drehung des Aufnahmerades 40 hindurchbewegt werden. Die Saugdüsen 42 sind im vorliegenden Beispielsfall gleichmäßig umfangsmäßig verteilt am Aufnahmerad 40 angeordnet. Die Saugdüsen 42 können als in sich flexible Saugrüssel ausgebildet sein, so dass sie äußerst produktschonend durch das Tablettenbett 32 hindurch bewegt werden können.

Durch Antreiben des Aufnahmerades 40 in Drehrichtung 46 nehmen die in das Tablettenbett 32 eintauchenden Saugdüsen in ihrer - im vorliegenden Beispielsfall-Sechs-Uhr-Stellung, die die Transport-Aufnahmeposition der jeweiligen Saugdüse 42 darstellt, durch entsprechende Saugluft eine Tablette 16 auf, die an ihrer Saugmündung angesaugt gehalten wird. Etwa zwischen der Acht-Uhr- und Neun-Uhr-Stellung der jeweiligen Saugdüse 42, die die Transport-Abgabeposition darstellt, wird keine Saugluft mehr durch die betreffende Düse 42 von außen angesaugt, sondern es wird im Gegenteil dazu Druckluft aus der betreffenden Saugdüse herausgestoßen. Dadurch fällt die an der Saugdüse 42 befindliche Tablette etwa zwischen der Acht-Uhr- und Neun-Uhr-Stellung der betreffenden Saugdüse 42 von der Saugdüse 42 nach außen ab und kann dadurch einer weiteren Bearbeitungs- oder Verarbeitungsstation vereinzelt zugeführt werden.

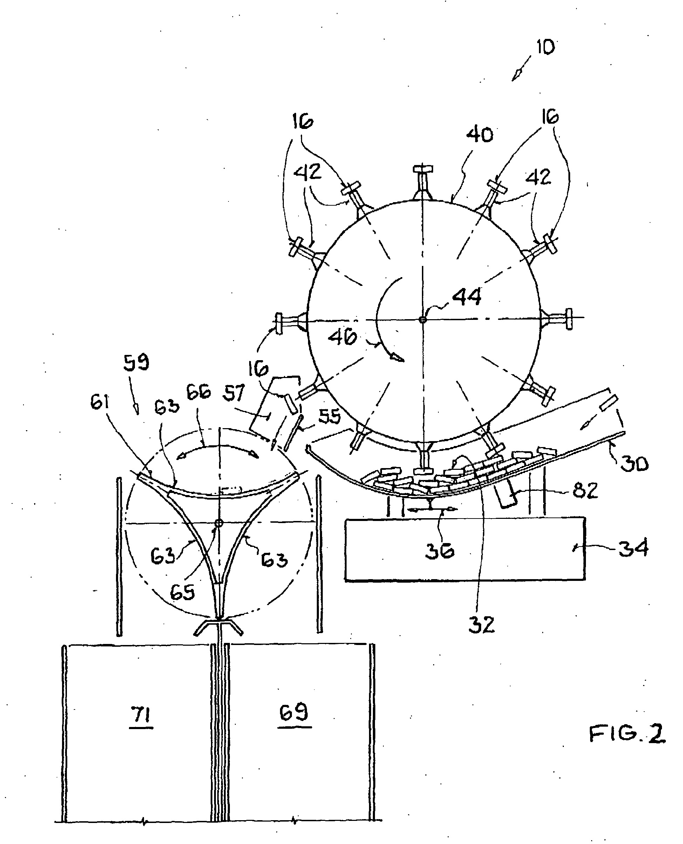

Gemäß Fig. 2 ist etwa in der Acht-Uhr-Stellung der betreffenden Saugdüse 42 eine lagemäßig entsprechend angeordnete schiefe Rampe 55 vorhanden. Diese Rampe 55 besitzt eine Längsrinne 57, in der die von der jeweiligen Düse 42 abgefallene beziehungsweise weggestoßene Tablette 16 einer Wägestation 59 zugleitet wird.

Die Wägestation 59 besitzt ein Drehglied 61, das umfangsmäßig gleichmäßig verteilte drei muldenförmige Wägeteller 63 besitzt. Das Drehglied 61 kann um seine drehzentrale Drehachse 65 umfangsmäßig in drei verschiedene Stellungen gedreht werden. In jeder Drehstellung ist ein Wägeteller 63, wie in Fig. 2 dargestellt, etwa horizontal angeordnet und schließt tangential nahtlos an die Rinne 57 der Rampe 55 an. Eine längs der Rinne 57 auf den Wägeteller 61 rollende oder rutschende Tablette 16 gleitend damit mehr oder weniger stoß- und sprungfrei und insbesondere beschädigungsfrei auf einen Wägeteller 63, wo sie dann gewogen wird. Sofern die in dem jeweils oberen Wägeteller 63 befindliche Tablette 16 ein im Sollbereich liegendes Gewicht besitzt, wird sie als sogenannte GUT-Tablette bewertet und durch entsprechendes Drehen des Drehgliedes um 120° Grad im Uhrzeigersinn in einen unten bereit stehenden GUT-Behälter 69 hinein geworfen. Eine nicht das Sollgewicht aufweisende Tablette wird als sogenannte SCHLECHT-Tablette in der Wägestation 59 gewichtsmäßig erfasst.

Dementsprechend wird das Drehglied 61 im Gegenuhrzeigersinn ebenfalls um 120° Grad und dabei diese SCHLECHT-Tablette in den in Fig. 1 im linken Bereich vorhandenen SCHLECHT-Behälter 71 hinein geworfen. Die in dem GUT-Behälter 69 befindlichen GUT-Tabletten können dann der weiteren Verarbeitung zugeführt werden. Insbesondere ist es möglich, diesen GUT-Behälter 69 beispielsweise einer Tablettendosierstation (Fig. 3) zuzuführen. Dieser GUT-Behälter 69 kann dann der Vorratsbehälter 14 einer solchen Dosierstation sein, wie sie nachstehend näher beschrieben wird.

Im vorliegenden Fall wird das Aufnahmerad 40 kontinuierlich in Drehrichtung 46 angetrieben. Die Förderleistung des Aufnahmerades 40 ist höher als die Wägeleistung in der Wägestation 59. Zeitweise zuviel an Saugdüsen bereitstehende Tabletten 16, die an die Wägestation 59 abgegeben werden sollen, können in den Bereich der Wanne 30 weitertransportiert werden, wozu sie entsprechend länger an ihren Saugdüsen 42 angesaugt gehalten werden. Eine entsprechend zweite Transport-Abgabeposition ist dann beispielsweise etwa in der Sieben-Uhr-Position des Aufnahmerades 40 vorhanden.

Die in Fig. 3 dargestellte Transportvorrichtung 10 wirkt mit einer Tablettensortier- und -dosiereinrichtung zusammen. Sie besitzt ein Gestell 12, an dem ein Vorratsbehälter 14 für Tabletten 16 befestigt ist. Mittels im vorliegenden Beispielsfall eines Vibrationsrüttlers 18, der an der Außenseite seiner Außenwand 20 befestigt ist, kann der Vibrationsrüttler 18 in Richtung des Doppelpfeils 22 in rasche Hin- und Herbewegung versetzt werden. Dadurch wird eine Gewölbebildung der in ihm eingelagerten Tabletten 16 verhindert.

An seinem unteren Ende besitzt der Vibrationsrüttler 18 eine Ausflussöffnung 24, die durch einen in Richtung des Doppelpfeils 26 beliebig hin und her verstellbaren Schieber 28 beliebig verschlossen oder geöffnet werden kann. Je nach Schieberstellung können dementsprechend mehr oder weniger Tabletten 16 aus dem Vorratsbehälter 14 durch seine Ausflussöffnung 24 heraus- und in die Wanne 30 hineinfallen kann. Aus der Wanne 30 werden die Tabletten 16 nacheinander mit der Transportvorrichtung 10 entnommen, wie dies vorstehend bereits beschrieben ist.

Etwa zwischen der Acht-Uhr- und Neun-Uhr-Stellung der jeweiligen Saugdüse 42, die die Transport-Abgabeposition darstellt, wird keine Saugluft mehr durch die betreffende Düse 42 von außen angesaugt, sondern es wird im Gegenteil dazu Druckluft aus der betreffenden Saugdüse herausgestoßen. Dadurch fällt die an der Saugdüse 42 befindliche Tablette etwa zwischen der Acht-Uhr- und Neun-Uhr-Stellung der betreffenden Saugdüse 42 von der Saugdüse 42 nach außen ab und in eine lagemäßig entsprechend angeordnete wannenartige Klappe 54. Diese Klappe 54 wird durch einen elastischen Körper, der im vorliegenden Beispielsfall eine Druckfeder 56 ist, in ihrer in Fig. 3 gestrichelt dargestellten Stellung gehalten. In dieser gestrichelten Stellung wird jede in sie hineinfallende Tablette 16 in die Wanne 30 wieder zurückfallen, aus der sie ursprünglich herausgesaugt worden ist. Endseitig der Klappe 54 ist eine Blasluft erzeugende, im vorliegenden Beispielsfall als Luftdüse 52 ausgebildete Blasluft-Einrichtung so angeordnet, dass durch ihre insbesonders ständig blasende Blasluft die Tabletten längs der Klappe 54 leicht entlanggleiten können und beispielsweise nicht ins Springen kommen können.

Die Klappe 54 besitzt einen oberen auskragenden Haken 58, der von oben in einen Gegenhaken 60 eingreift, der am unteren Ende eines Schiebers 62 ausgebildet ist. Der Schieber 62 kann mittels eines Antriebes 64 hoch und runter bewegt werden. Bei seiner Bewegung in Richtung des Pfeils 66 nach oben, wird in Folge seines Gegenhakens 60 und des Hakens 58 die Klappe 54 in Richtung des Pfeils 68 im Uhrzeigersinn verschwenkt. Das untere Ende der durchgezogen dargestellten Klappe 54 liegt dann oberhalb eines im vorliegenden Beispielsfall etwa senkrecht angeordneten schachtförmigen Zuführkanals 70.

Der Zuführkanal 70 kann durch einen Absperrschieber 72 an seinem unteren Ende verschlossen oder geöffnet werden. Der Absperrschieber 72 lässt sich dementsprechend in Richtung des Doppelpfeils 74 hin und her bewegen. Über einen Sensor 76 wird der Innenraum des Zuführkanals 70 dahingehend überwacht, ob in demselben die entsprechende Anzahl von Tabletten vorhanden ist, die in ein unterhalb des Zuführkanals 70 bereitstehendes Unterteil einer Hartgelatinekapsel 80 hineingefüllt werden soll. Bei den entsprechend vorhandenen Tabletten wird der Absperrschieber 72 in seine den Zuführkanal 70 öffnende Stellung bewegt. Ansonsten versperrt der Absperrschieber 72 das untere Ende des Zuführkanals 70.

Auch im vorliegenden Fall wird das Aufnahmerad 40 kontinuierlich in Drehrichtung 46 angetrieben. Die Förderleistung des Aufnahmerades 40 ist höher, als sie an sich für das Befüllen von Hartgelatinekapseln 80 benötigt wird. Dadurch wird sichergestellt, dass immer die tatsächlich zum Befüllen der jeweiligen Kapsel 80 erforderlichen Tabletten in dem Zuführkanal 70 auch bereitstehen. Die von den Saugdüsen 42 jeweils in die Klappe 54 durch Druckstöße hineingestoßenen Tabletten 16, die jeweils nicht zum Befüllen einer Kapsel 80 benötigt werden, fallen also wieder in die Wanne 30 zurück.

Die gesamten Vorrichtungen 10, insbesondere auch die Wägestation mit ihren Wägetellern und die Tablettensortier- und -dosierstation haben den großen Vorteil, dass die Tabletten schonend behandelt werden und dass alle ihre Produkte berührenden Teile einfach demontierbar und gereinigt werden können. Außerdem sind die Geräteteile weitestgehend formatfrei, so dass Umbaumaßnahmen bei einem Formatwechsel von Tabletten oder sonstigen Kleinteilen nicht erforderlich werden.

In der Wanne 30 ist ein Sensor 82 vorhanden, der die Höhe des Tablettenbettes 32 überwacht. Der Sensor 82 kann dazu benutzt werden, den Vibrationsrüttler 18 oder auch alternativ oder zusätzlich dazu den die Ausflussöffnung 24 des Vorratsbehälters 14 mehr oder wenig verschließenden Schieber 28 anzusteuern. So kann abhängig vom Füllstand der Tabletten innerhalb der Wanne 30 der Zufluss von Tabletten aus dem Vorratsbehälter 14 heraus gesteuert werden.

Die in der Wanne jeweils angesaugte Tablette 16 wird parallel zur Zeichenebene, durch eine stabartige Ausrichtbarriere 50 lagemäßig ausgerichtet. Auf diese Weise wird erreicht, dass längliche Tabletten mit ihrer Längsausdehnung parallel zur Zeichenebene ausgerichtet werden und nicht mit ihrer Längsausrichtung in Richtung der Drehachse 44, also quer zur Drehrichtung 46 an der jeweiligen Saugdüse 42 lagemäßig vorhanden sind. Durch die Ausrichtbarriere 50 werden bei Bewegen der einzelnen Tabletten infolge der Drehung des Aufnahmerades 40 die Tabletten in Richtung der Drehrichtung 46 ausgerichtet.

Das Ansaugen der Tabletten durch die Ansaugdüsen ermöglicht es, dass Tabletten mit allen gängigen Tablettenformen durch das Aufnahmerad 40 aus dem Tablettenbett 32 zu beliebigen weiteren Stationen transportiert werden können. Die jeweilige seitliche Ausrichtung der einzelnen Tabletten, sollte sie erforderlich sein, kann durch eine oder mehrere Ausrichtbarrieren 50 sichergestellt werden. Diese Ausrichtbarrieren werden dann auf die Form und Größe der jeweils zu transportierenden Tabletten 16 eingestellt.

Das Aufnahmerad 40 ist im vorliegenden Beispielsfall so ausgebildet, dass jeweils mehrere, wie im vorliegenden Beispielsfall drei Saugdüsen 42 senkrecht zur Zeichenebene hintereinander liegen, also in Richtung der Drehachse 44 hintereinander liegen. Es sind dann dementsprechend bei der Wägestation 59 auch drei Rinnen 57 und drei Drehglieder 61 beziehungsweise drei mal drei Wägeteller 63 vorhanden.

Bei der Tablettensortier- und -dosierstation (Fig. 3) liegen dementsprechend drei Klappen 54 in Richtung der Drehachse 44 ausgerichtet hintereinander. Entsprechend mehrfach, also im vorliegenden Beispielsfall dreifach ist auch der Zuführkanal 70 vorhanden. Dementsprechend können in der gleichen Stellung der jeweiligen Saugdüsen 42 drei Tabletten 16 in drei Klappen 54 hineinfallen. Jede Tablette 16 fällt dabei in eine einzelne Klappe 54. Auf diese Weise kann sichergestellt werden, dass die Tablette aus jeder der drei Klappen 54 in drei Zuführkanäle 70 hineingebracht wird oder das wahlweise ein oder zwei oder drei Tabletten von der Klappe 54 wieder in die gemeinsame Wanne 30 zurückgebracht werden können. Auch bei dieser Anordnung können in jeden der beispielsweise drei Zuführkanäle 70 eine oder beliebig viele Tabletten 16 hineingebracht werden, so dass auch in diesem Falle drei Hartgelatinekapseln 80 gleichzeitig, mit beliebig vielen Tabletten 16 befüllt werden können.

Statt der in der Zeichnung umfangsmäßig gleichmäßig verteilt angeordneten 12 Saugdüsen 42 sind dann dreimal so viele, das heißt 36 entsprechende Saugdüsen vorhanden. Jede Saugdüse 42 ist gewissermaßen dreifach vorhanden.

Die Saugdüsen können, wie vorstehend ausgeführt, in sich flexibel ausgebildet sein. Dadurch soll ein möglichst sanfter Berührkontakt zwischen der jeweiligen Saugdüse und dem anzusaugenden kleinen Teilchen, wie insbesondere einer zerbrechlichen Tablette, sichergestellt werden.

Die flexible Ausbildung kann alternativ oder zusätzlich durch eine elastisch nachgiebige Ausbildung der Außenfläche der Saugdüsen erreicht oder verbessert werden.

## Patentansprüche

1. Vorrichtung (10) zum vereinzelten Weitertransport von leichten Kleinteilen, wie insbesondere von Tabletten (16),
- mit einer rinnenförmigen Wanne (30),
- mit einer Zwischentransport-Einrichtung für Kleinteile, die mehrere Saugdüsen (42) zum angesaugt haltenden Zwischentransport von Kleinteilen enthält,
- wobei die Saugdüsen (42) umfangsmäßig verteilt an zumindest einem in einer Umdrehungsrichtung (46) antreibbaren, insbesondere kontinuierlich antreibbaren Aufnahmerad (40) oder zumindest einer Aufnahmewalze vorhanden sind,
- wobei jede Saugdüse (42) abwechselnd zwischen einer Transport-Aufnahmeposition und zumindest einer Transport-Abgabeposition verstellbar ist, wobei die betreffende Saugdüse (42) von der Wanne (30) wegbewegbar und zu der Wanne (30) hinbewegbar ist,
- wobei die Zwischentransport-Einrichtung wie beispielsweise das Aufnahmerad (40) oder die Aufnahmewalze insbesondere mit Saugdüsen (42) in ein innerhalb der Wanne (30) ausbildbares Kleinteilebett wie Tablettenbett (32) eintauchbar ausgebildet ist,
**dadurch gekennzeichnet, dass**
- zumindest zwei unterschiedliche Transportabgabepositionen so vorhanden sind, dass
- das jeweilige Kleinteil wie Tablette (16) entweder wieder in die Wanne (30) zurücktransportierbar oder an eine weitere Bearbeitungs- oder Verteilungsstation übergebbar ist.

2. Vorrichtung nach Anspruch 1,
- **dadurch gekennzeichnet, dass**
- auf die Kleinteile wie Tabletten (16) in ihrer jeweiligen Transport-Abgabeposition keine Saugluft oder Druckluft einwirksam ist.

3. Vorrichtung nach Anspruch 1 oder 2,
- **dadurch gekennzeichnet, dass**
- die weitere Station eine Wägestation (59) oder eine Tablettensortier- und -dosierstation ist.

4. Vorrichtung nach Anspruch 3,
- **dadurch gekennzeichnet, dass**
- die Wägestation (59) zum gewichtsmäßigen Unterscheiden von GUT- oder SCHLECHT-Kleinteilen wie Tabletten angelegt ist.

5. Vorrichtung nach Anspruch 3 oder 4,
- **dadurch gekennzeichnet, dass**
- die Wägestation (59) zumindest einen Wägeteller (63) besitzt, der in gegensätzlichen Richtungen dreh- oder schwenkbar ist, so dass Kleinteile wie Tabletten (16) in GUT-Behälter (69) oder SCHLECHT-Behälter (71) wahlweise hineinfüllbar sind.

6. Vorrichtung nach Anspruch 5,
- **dadurch gekennzeichnet, dass**
- der Wägeteller (63) muldenförmig ist.

7. Vorrichtung nach Anspruch 5 oder 6,
- **dadurch gekennzeichnet, dass**
- mehrere Wägeteller (63) umfangsmäßig verteilt auf einem Drehglied (61) so vorhanden sind, dass
- in jeder Drehstellung des Drehgliedes (61) jeweils zumindest ein Wägeteller (63) zur Aufnahme von Kleinteilen wie Tabletten (16) lagemäßig bereit steht.

8. Vorrichtung nach einem der Ansprüche 5 bis 7,
- **dadurch gekennzeichnet, dass**
- mehrere Wägeteller (63) umfangsmäßig gleichmäßig verteilt an einem Drehglied (61) angebracht sind,
- das Drehglied (61) in entgegengesetzten Richtungen um einen festen Winkelbetrag verdrehbar ist,
- dieser Winkelbetrag dem Winkelbetrag entspricht, der dem umfangsmäßigen Abstand zueinander benachbarter Wägeteller (63) entspricht.

9. Vorrichtung nach einem der Ansprüche 3 bis 8,
- **dadurch gekennzeichnet, dass**
- ein insbesondere rinnenförmiger Zuführkanal (55, 57) zwischen der Wägestation (59) beziehungsweise ihrem zumindest einen Wägeteller (63) und einer Transport-Abgabeposition der zumindest einen Saugdüse (42) vorhanden ist.

10. Vorrichtung nach Anspruch 8,
- **dadurch gekennzeichnet, dass**
- die Neigung des Endbereiches des Zuführkanals der Neigung des Randbereiches jedes Wägetellers (63) dann entspricht, wenn der Wägeteller (63) mit seinem Randbereich dem Endbereich benachbart ist.

11. Vorrichtung nach einem der vorstehenden Ansprüche,
- **dadurch gekennzeichnet, dass**
- ein Kleinteilebett wie Tablettenbett (32) in der rinnenförmigen Wanne (30) herstellbar ist.

12. Vorrichtung nach Anspruch 11,
- **dadurch gekennzeichnet, dass**
- das eine Ende der Wanne (30) an der Ausflussöffnung (24) eines Vorratsbehälters (14) für Kleinteile wie Tabletten (16) so angeordnet ist, dass Kleinteile wie Tabletten (16) von dem Vorratsbehälter (14) an die Wanne (30) übergebbar sind,
- der Ausfluss aus der Ausflussöffnung (24) des Vorratsbehälters (14), insbesondere die Größe der Ausflussöffnung (24) des Vorratsbehälters (14) veränderbar ist.

13. Vorrichtung nach einem der vorstehenden Ansprüche,
- **dadurch gekennzeichnet, dass**
- die Wanne (30) intermittierend so bewegbar ist, dass eine möglichst gleichmäßige Verteilung der Kleinteile wie Tabletten (16) in der Wanne (30) herstellbar ist.

14. Vorrichtung nach einem der vorstehenden Ansprüche,
- **dadurch gekennzeichnet, dass**
- eine die Kleinteile wie Tabletten in der Zwischentransport-Einrichtung, wie insbesondere an den Saugdüsen (42) lagemäßig ausrichtende, insbesondere stab- oder wandartig ausgebildete Ausricht-Einrichtung (50) vorhanden ist, die insbesondere in ihrer Lage und/oder in ihrer Größe verstellbar ist.

15. Vorrichtung nach einem der vorstehenden Ansprüche,
- **dadurch gekennzeichnet, dass**
- eine Einrichtung, wie insbesondere zumindest jeweils ein Sensor (82), zum Überwachen der Höhe des Kleinteilebettes wie Tablettenbettes (32) vorhanden ist.

16. Vorrichtung nach Anspruch 15,
- **dadurch gekennzeichnet, dass**
- eine Rüttel- oder Vibriervorrichtung (18) für den Vorratsbehälter (14) angeordnet ist, wobei die Rüttel- oder Vibriervorrichtung in Abhängigkeit von der Höhe des Kleinteilebettes wie Tablettenbettes (32) betreibbar ist.

17. Vorrichtung nach einem der Ansprüche 3 bis 16,
- **dadurch gekennzeichnet, dass**
- eine insbesondere als verschwenkbare Klappe (54) ausgebildete Sortiereinrichtung in der Transport-Abgabeposition eines jeweiligen Kleinteils wie einer jeweiligen Tablette (16) so auf dasselbe beziehungsweise dieselbe einwirksam ist, dass dieses Kleinteil wie diese Tablette (16) wahlweise in ein Behältnis, wie insbesondere in eine Hartgelatinekapsel (80), einführbar ist oder nicht einführbar ist.

18. Vorrichtung nach Anspruch 17,
- **dadurch gekennzeichnet, dass**
- eine Blasluft erzeugende, insbesondere als Blasdüse (52) ausgebildete Blasluft-Einrichtung für in der Sortiereinrichtung wie für längs einer Klappe (54) bewegbare Kleinteile wie Tabletten (16) vorhanden ist.

19. Vorrichtung nach Anspruch 17 oder 18,
- **dadurch gekennzeichnet, dass**
- die Sortiereinrichtung so auf ein Kleinteil wie eine Tablette (16) einwirksam ist, dass dasselbe beziehungsweise dieselbe in das Kleinteilebett wie Tablettenbett (32) zurückführbar ist.

20. Vorrichtung nach einem der Ansprüche 17 bis 19,
- **dadurch gekennzeichnet, dass**
- in ihrer Transport-Abgabeposition das jeweilige Kleinteil wie beispielsweise die jeweilige Tablette (16) mittelbar oder unmittelbar in ein Behältnis, wie insbesondere in eine Kapsel (80), einbringbar ist.

21. Vorrichtung nach Anspruch 20,
- **dadurch gekennzeichnet, dass**
- ein Kleinteil wie eine Tablette (16) aus seiner beziehungsweise ihrer Transport-Abgabeposition insbesondere über einen Zuführkanal (70) in ein Behältnis, wie insbesondere in eine Kapsel (80), bringbar ist.

22. Vorrichtung nach einem der vorstehenden Ansprüche,
- **dadurch gekennzeichnet, dass**
- sie (10) abgetrennt von dem Raum, in dem die Kleinteile wie Tabletten (16) produziert oder be- oder verarbeitet werden, vorhanden ist.

23. Vorrichtung nach Anspruch 22,
- **dadurch gekennzeichnet, dass**
- sie (10) in einer Balkonbauweise an der Außenwand des Raumes wie insbesondere auf einer Behälterfüllmaschine, wie insbesondere einer Kapselfüllmaschine, vorhanden ist.

24. Vorrichtung nach einem der Ansprüche 7 bis 23,
- **dadurch gekennzeichnet, dass**
- ihr GUT-Behälter (69) ein Vorratsbehälter (14) ist zum Befüllen von einzelnen Behältern wie insbesondere Hartgelatinekaspeln mit jeweils einer vorbestimmten Anzahl von oder gewichtsmäßigen Mengen an Kleinteilen wie Tabletten.

25. Vorrichtung nach einem der vorstehenden Ansprüche,
- **dadurch gekennzeichnet, dass**
- die Saugdüsen (42) in sich flexibel, insbesondere in Form von biegeweichen Kunststoffschläuchen, ausgebildet sind.

26. Vorrichtung nach einem der vorstehenden Ansprüche,
- **dadurch gekennzeichnet, dass**
- die Außenfläche der Saugdüsen (42) elastisch nachgiebig ausgebildet ist.

## Claims

1. Apparatus (10) for the individual further transport of light small parts, such as, in particular, tablets (16),
- having a groove-shaped trough (30),
- having an intermediate transport device for small parts, which device comprises a plurality of suction nozzles (42) for the intermediate transport of small parts in a manner which is held by suction,
- the suction nozzles (42) being present in a circumferentially distributed manner on at least one receiving wheel (40) which can be driven in one rotational direction (46) and can be driven, in particular, continuously, or on at least one receiving roll,
- it being possible for each suction nozzle (42) to be adjusted alternately between a transport receiving position and at least one transport delivery position, it being possible for the relevant suction nozzle (42) to be moved away from the trough (30) and to be moved towards the trough (30),
- the intermediate transport device such as the receiving wheel (40) or the receiving roll being configured such that it can dip, in particular by way of suction nozzles (42), into a small-part bed, such as a tablet bed (32), which can be formed within the trough (30), **characterized in that**
- at least two different transport delivery positions are present in such a way that
- the respective small part such as a tablet (16) can either be transported back into the trough (30) again or can be transferred to a further processing or distribution station.

2. Apparatus according to Claim 1,
- **characterized in that**
- no suction air or compressed air can act on the small parts such as tablets (16) in their respective transport delivery position.

3. Apparatus according to Claim 1 or 2,
- **characterized in that**
- the further station is a weighing station (59) or a tablet sorting and metering station.

4. Apparatus according to Claim 3,
- **characterized in that**
- the weighing station (59) is designed for distinguishing in weight terms between GOOD and BAD small parts such as tablets.

5. Apparatus according to Claim 3 or 4,
- **characterized in that**
- the weighing station (59) has at least one weighing pan (63) which can be rotated or pivoted in opposite directions, with the result that small parts such as tablets (16) can be filled optionally into GOOD containers (69) or BAD containers (71).

6. Apparatus according to Claim 5,
- **characterized in that**
- the weighing pan (63) is recessed.

7. Apparatus according to Claim 5 or 6,
- **characterized in that**
- a plurality of weighing pans (63) are present in a circumferentially distributed manner on a rotary element (61) in such a way that,
- in each case at least one weighing pan (63) is provided positionally in every rotational position of the rotary element (61) for receiving small parts such as tablets (16).

8. Apparatus according to one of Claims 5 to 7,
- **characterized in that**
- a plurality of weighing pans (63) are attached to a rotary element (61) in a circumferentially uniformly distributed manner,
- the rotary element (61) can be rotated in opposite directions by a fixed angular amount,
- this angular amount corresponds to the angular amount which corresponds to the circumferential spacing of mutually adjacent weighing pans (63).

9. Apparatus according to one of Claims 3 to 8,
- **characterized in that**
- a feed channel (55, 57) which is, in particular, groove-shaped is present between the weighing station (59) or its at least one weighing pan (63) and a transport delivery position of the at least one suction nozzle (42).

10. Apparatus according to Claim 8,
- **characterized in that**
- the inclination of the end region of the feed channel corresponds to the inclination of the edge region of each weighing pan (63) when the edge region of the weighing pan (63) is adjacent to the end region.

11. Apparatus according to one of the preceding claims,
- **characterized in that**
- a small-part bed such as a tablet bed (32) can be produced in the groove-shaped trough (30).

12. Apparatus according to Claim 11,
- **characterized in that**
- one end of the trough (30) is arranged at the outflow opening (24) of a storage container (14) for small parts such as tablets (16) in such a way that small parts such as tablets (16) can be transferred from the storage container (14) to the trough (30), and
- the outflow from the outflow opening (24) of the storage container (14), in particular the size of the outflow opening (24) of the storage container (14), can be varied.

13. Apparatus according to one of the preceding claims,
- **characterized in that**
- the trough (30) can be moved intermittently in such a way that as uniform a distribution as possible of the small parts such as tablets (16) can be produced in the trough (30).

14. Apparatus according to one of the preceding claims,
- **characterized in that**
- there is an orienting device (50) which orients the small parts such as tablets positionally in the intermediate transport device, such as, in particular, at the suction nozzles (42), is of rod-like or wall-like configuration, in particular, and can have, in particular, its position and/or its size adjusted.

15. Apparatus according to one of the preceding claims,
- **characterized in that**
- there is a device, such as, in particular, at least in each case one sensor (82), for monitoring the height of the small-part bed such as the tablet bed (32).

16. Apparatus according to Claim 15,
- **characterized in that**
- a shaking or vibrating apparatus (18) is arranged for the storage container (14), it being possible for the shaking or vibrating apparatus to be operated as a function of the height of the small-part bed such as the tablet bed (32).

17. Apparatus according to one of Claims 3 to 16,
- **characterized in that**
- a sorting device which is configured, in particular, as a pivotable flap (54) acts on a respective small part such as a respective tablet (16) in the transport delivery position of the said small part or tablet in such a way that the said small part such as the said tablet (16) can optionally be inserted or not be inserted into a container, such as, in particular, a hard gelatine capsule (80).

18. Apparatus according to Claim 17,
- **characterized in that**
- there is a blown-air device which produces blown air and is configured, in particular, as a blower nozzle (52), for small parts, such as tablets (16), which can be moved in the sorting device such as along a flap (54).

19. Apparatus according to Claim 17 or 18,
- **characterized in that**
- the sorting device acts on a small part such as a tablet (16) in such a way that the latter can be returned into the small-part bed such as the tablet bed (32).

20. Apparatus according to one of Claims 17 to 19,
- **characterized in that**,
- in its transport delivery position, the respective small part such as the respective tablet (16) can be introduced indirectly or directly into a container, such as, in particular, into a capsule (80).

21. Apparatus according to Claim 20,
- **characterized in that**
- a small part such as a tablet (16) can be moved out of its transport delivery position, in particular via a feed channel (70), into a container, such as, in particular, into a capsule (80).

22. Apparatus according to one of the preceding claims,
- **characterized in that**
- it (10) is present separately from the space in which the small parts such as tablets (16) are produced or treated or processed.

23. Apparatus according to Claim 22,
- **characterized in that**
- it (10) is present in a cantilevered construction on the outer wall of the space such as, in particular, on a container-filling machine, such as, in particular, on a capsule-filling machine.

24. Apparatus according to one of Claims 7 to 23,
- **characterized in that**
- its GOOD container (69) is a storage container (14) for filling individual containers such as, in particular, hard gelatine capsules with in each case a predefined number of or specific quantities by weight of small parts such as tablets.

25. Apparatus according to one of the preceding claims,
- **characterized in that**
- the suction nozzles (42) per se are of flexible configuration, in particular in the form of flexurally soft plastic hoses.

26. Apparatus according to one of the preceding claims,
- **characterized in that**
- the outer face of the suction nozzles (42) is of elastically resilient configuration.

## Revendications

1. Dispositif (10) pour transporter plus loin individuellement des objets légers de petite taille, comme en particulier des comprimés (16),
- avec un bac (30) en forme de goulotte,
- avec un équipement de transport intermédiaire pour objets de petite taille, qui contient plusieurs buses aspirantes (42) pour le transport intermédiaire d'objets de petite taille en les maintenant par aspiration,
- sachant que les buses aspirantes (42) sont présentes, réparties sur la circonférence, sur au moins une roue réceptrice (40), ou au moins un cylindre récepteur, qui peut être entraîné(e), notamment en continu, dans une direction de rotation (46),
- sachant que chaque buse aspirante (42) peut être alternativement déplacée entre une position de transport de réception et au moins une position de transport de délivrance, la buse aspirante concernée (42) pouvant être déplacée en éloignement du bac (30) et en direction du bac (30),
- sachant que l'équipement de transport intermédiaire, comme par exemple la roue réceptrice (40) ou le cylindre récepteur, est notamment conçu pour pouvoir être enfoncé par des buses aspirantes (42) dans une couche d'objets de petite taille pouvant être formée à l'intérieur du bac (30), telle qu'une couche de comprimés (32),
**caractérisé en ce qu'**au moins deux positions de transport de délivrance différentes sont présentes, de telle sorte que l'objet de petite taille respectif, tel que le comprimé (16), peut être soit ramené dans le bac (30), soit transféré à un poste ultérieur de traitement ou de répartition.

2. Dispositif selon la revendication 1, **caractérisé en ce que** les objets de petite taille tels que des comprimés (16) ne sont pas exposés à l'action d'air d'aspiration ou d'air comprimé dans leur position de transport de délivrance respective.

3. Dispositif selon la revendication 1 ou 2, **caractérisé en ce que** le poste ultérieur est un poste de pesage (59) ou un poste de tri et de dosage de comprimés.

4. Dispositif selon la revendication 3, **caractérisé en ce que** le poste de pesage (59) est conçu pour distinguer en terme de poids des objets de petite taille, tels que des comprimés, CORRECTS ou INCORRECTS.

5. Dispositif selon la revendication 3 ou 4, **caractérisé en ce que** le poste de pesage (59) possède au moins un plateau de pesage (63) qui est pivotant ou rotatif dans des directions opposées, de sorte que des objets de petite taille tels que des comprimés (16) peuvent être sélectivement remplis dans un récipient (69) d'objets CORRECTS ou dans un récipient (71) d'objets INCORRECTS.

6. Dispositif selon la revendication 5, **caractérisé en ce que** le plateau de pesage (63) est en forme de cuvette.

7. Dispositif selon la revendication 5 ou 6, **caractérisé en ce que** plusieurs plateaux de pesage (63) sont présents circonférentiellement répartis sur un organe rotatif (61) de telle sorte que, dans chaque position de rotation de l'organe rotatif (61), au moins un plateau de pesage respectif (63) se trouve dans une position qui le rend disponible pour recevoir des objets de petite taille tels que des comprimés (16).

8. Dispositif selon l'une des revendications 5 à 7, **caractérisé en ce que**
- plusieurs plateaux de pesage (63) sont installés sur un organe rotatif (61) en étant circonférentiellement uniformément répartis,
- l'organe rotatif (61) est rotatif d'une valeur d'angle fixe dans des directions opposées,
- cette valeur d'angle correspond à la valeur d'angle qui correspond à la distance circonférentielle entre des plateaux de pesage (63) mutuellement voisins.

9. Dispositif selon l'une des revendications 5 à 8, **caractérisé en ce qu'**un conduit d'alimentation (55, 57) notamment en forme de goulotte est présent entre le poste de pesage (59) ou encore son plateau de pesage (63) au moins unique et une position de transport de délivrance de la buse aspirante (42) au moins unique.

10. Dispositif selon la revendication 8, **caractérisé en ce que** la pente de la région terminale du conduit d'alimentation correspond à la pente de la région de bord de chaque plateau de pesage (63) lorsque le plateau de pesage (63) est voisin de la région terminale par sa région de bord.

11. Dispositif selon l'une des revendications précédentes, **caractérisé en ce qu'**on peut former dans le bac (30) en forme de goulotte une couche d'objets de petite taille telle qu'une couche de comprimés (32).

12. Dispositif selon la revendication 11, **caractérisé en ce que**
- l'une des extrémités du bac (30) est disposée à l'ouverture de sortie (24) d'un récipient (14) de stockage d'objets de petite taille tels que des comprimés (16) de telle sorte que des objets de petite taille tels que des comprimés (16) peuvent être transférés du récipient de stockage (14) au bac (30),
- le débit de sortie par l'ouverture de sortie (24) du récipient de stockage (14), notamment la taille de l'ouverture de sortie (24) du récipient de stockage (14), peut être modifié(e).

13. Dispositif selon l'une des revendications précédentes, **caractérisé en ce que** le bac (30) peut être déplacé de façon intermittente de telle sorte qu'on peut obtenir une répartition la plus uniforme possible des objets de petite taille tels que des comprimés (16) dans le bac (30).

14. Dispositif selon l'une des revendications précédentes, **caractérisé en ce qu'**un équipement de positionnement (50) réalisé notamment en forme de barre ou de paroi est présent qui positionne les objets de petite taille tels que des comprimés dans l'équipement de transport intermédiaire, notamment face aux buses aspirantes (42), et dont notamment la position et/ou la taille sont réglables.

15. Dispositif selon l'une des revendications précédentes, **caractérisé en ce qu'**un équipement, comme notamment au moins un capteur respectif (82), est présent pour surveiller la hauteur de la couche d'objets de petite taille telle que la couche de comprimés (32).

16. Dispositif selon la revendication 15, **caractérisé en ce qu'**un dispositif secoueur ou vibreur (18) est présent pour le récipient de stockage (14), sachant qu'on peut faire fonctionner le dispositif secoueur ou vibreur en fonction de la hauteur de la couche d'objets de petite taille telle que la couche de comprimés (32).

17. Dispositif selon l'une des revendications 3 à 16, **caractérisé en ce qu'**un équipement de tri réalisé notamment sous forme de volet pivotant (54) agit, dans la position de transport de délivrance d'un objet de petite taille respectif tel qu'un comprimé respectif (16), sur ce dernier de telle sorte que cet objet de petite taille tel que ce comprimé (16) peut être sélectivement introduit ou non dans un contenant, comme notamment dans une capsule en gélatine dure (80).

18. Dispositif selon la revendication 17, **caractérisé en ce qu'**un équipement d'air de soufflage, produisant de l'air de soufflage et réalisé notamment sous forme de buse de soufflage (52), est présent pour des objets de petite taille tels que des comprimés (16) pouvant être déplacés dans l'équipement de tri, notamment le long d'un volet (54).

19. Dispositif selon la revendication 17 ou 18, **caractérisé en ce que** l'équipement de tri actif sur un objet de petite taille tel qu'un comprimé (16) de telle sorte que ce dernier peut être ramené dans la couche d'objets de petite taille telle que la couche de comprimés (32).

20. Dispositif selon l'une des revendications 17 à 19, **caractérisé en ce que**, dans sa position de transport de délivrance respective, l'objet de petite taille respectif tel par exemple que le comprimé respectif (16) peut être introduit indirectement ou directement dans un contenant, comme notamment dans une capsule (80).

21. Dispositif selon la revendication 20, **caractérisé en ce qu'**un objet de petite taille tel qu'un comprimé (16) peut être amené de sa position de transport de délivrance dans un contenant, comme notamment dans une capsule (80), par l'intermédiaire notamment d'un conduit d'alimentation (70).

22. Dispositif selon l'une des revendications précédentes, **caractérisé en ce que** ce dispositif (10) est présent séparément de l'espace dans lequel les objets de petite taille tels que des comprimés (16) sont produits ou traités ou transformés.

23. Dispositif selon la revendication 22, **caractérisé en ce que** ce dispositif (10) est présent en construction en balcon sur la paroi extérieure dudit espace, comme notamment sur une machine de remplissage de contenants, telle notamment qu'une machine de remplissage de capsules.

24. Dispositif selon l'une des revendications 7 à 23, **caractérisé en ce que** son récipient (69) d'objets CORRECTS est un récipient de stockage (14) pour remplir des contenants individuels comme notamment des capsules en gélatine dure avec chaque fois un nombre prédéterminé ou une quantité en poids prédéterminée d'objets de petite taille tels que des comprimés.

25. Dispositif selon l'une des revendications précédentes, **caractérisé en ce que** les buses aspirantes (42) sont réalisées en soi flexibles, notamment sous la forme de manches en matière plastique souples en flexion.

26. Dispositif selon l'une des revendications précédentes, **caractérisé en ce que** la surface extérieure des buses aspirantes (42) est réalisée élastiquement flexible.
